# EUROPEAN PATENT APPLICATION

(11) **EP 4 686 834 A1**
(43) Date of publication of application: **04.02.2026**
(21) Application number: 24192421.6
(22) Date of filing: 01.08.2024
(51) Int. Cl.: F16B 5/00

(54) **SELF-CLAMP LOCK**

(71) Applicant: Flooring Technologies Ltd., Kalkara SCM 1001 (MT)
(72) Inventor: Stachow, Grzegorz, 68-200 Zary (PL)
(74) Representative: Kalkoff & Partner Patentanwälte mbB

(57) **Abstract**

The invention concerns a connection of a 1^{st} board and a 2^{nd} board made from wood or reconstituted wood, said 1^{st} and 2^{nd} boards being arranged in a XY-plane, said 1^{st} and 2^{nd} boards each having a 1^{st} and a 2^{nd} surface, a thickness and an edge area with an edge surface (4a) extending over the thickness (T) of the board. To provide a simple and easy to manufacture link between two boards, the connection comprises a profile (5) in each board (1, 2) extending over at least part of the edge area (4), said profile (5) comprising at least one standard cutout (6) and a terminal cutout (6a) extending in the edge area (4) from a surface (3, 14) of a board over part of its thickness (T), each cutout (6, 6a) being less deep in a 1^{st} section (7) adjacent to the edge surface (4a) of the board (1,2) and being deeper in a 2^{nd} section (8) at a distance from the edge surface (4a) of the board (1,2), with an undercut (9) separating the 1^{st} and the 2^{nd} section, said undercut (9) forming a 1^{st} abutment (10) in an X-direction, wherein a 2^{nd} abutment (15) in a Y-direction is formed on the 1^{st} and on the 2^{nd} board, said 1^{st} and 2^{nd} abutment (10,15) being arranged in the X- or Y-direction, respectively, or at an angle thereto, with the profile (5) of the 1^{st} board (1) and the 2^{nd} board (2) complementing each other, wherein a terminal cutout (6a) is shorter in Y-direction than a standard cutout (6). The invention further comprises a method of forming a connection between a 1^{st} and a 2^{nd} board.

## Description

The invention refers to a connection between a 1^{st} and a 2^{nd} board and to a method of forming a connection between a 1^{st} and a 2^{nd} board.

One embodiment of a lock suited for forming a connection between two boards has been disclosed in EP 4 446 054 A1, said connection being based upon a tongue-and-groove profile. The first and the second board to be connected each carry a different part of the profile. To create the tongue-and-groove profile, different tools are required for each part of the profile.

It is thus an object of the invention to provide a connection between a 1^{st} and a 2^{nd} board that is easy to manufacture.

The connection that complies with the object cited-above is claimed in claim 1 and a complementing method for mounting is claimed by claim 14.

The connection of a 1^{st} board and a 2^{nd} board made from wood or reconstituted wood according to the invention comprises said 1^{st} and 2^{nd} boards being arranged in a XY-plane, said 1^{st} and 2^{nd} boards each having a 1^{st} and a 2^{nd} surface, a thickness and an edge area with an edge surface extending over the thickness of the board, wherein the connection comprises a profile in each board extending over at least part of the edge area, said profile comprising a sequence of standard cutouts and a terminal cutout extending from a surface in the edge area of a board over part of its thickness, each cutout being less deep in a 1^{st} section adjacent to the edge surface of the board and being deeper in a 2^{nd} section at a distance from the edge surface of the board, with an undercut separating the 1^{st} and the 2^{nd} section, said undercut forming a 1^{st} abutment in an X-direction and wherein a 2^{nd} abutment in an Y-direction is formed on the 1^{st} and on the 2^{nd} board, said 1^{st} and 2^{nd} abutment being arranged in the X- or Y-direction, respectively, or at an angle thereto, with the profile of the 1^{st} board and the 2^{nd} board complementing each other, wherein a terminal cutout is shorter in Y-direction than a standard cutout.

The connection is based on a profile which is formed in each board, the profile of the 1^{st} and the 2^{nd} board complementing each other so that they fit when forming the connection. Thus, one set of two templates, one for each board, is sufficient to work the profile of the connection according to the invention into the 1^{st} and the 2^{nd} board. Any tool suited to remove material from the 1^{st} and 2^{nd} board may be used, e. g. a milling tool and/or a planing tool. The connection according to the invention can preferably be mounted by one person only by a first movement in Z-direction, said Z-direction runs perpendicular to the XY-plane of the boards and then by a second movement in Y-direction. Only this two-step movement is required to join the 1^{st} and the 2^{nd} board. Another essential advantage of the connection according to the invention is that it can be mounted without the help of tools. Preferably, the profile is worked into the two boards to be joined at a manufacturing site and the finished boards including the profile are provided ready-to-mount to the mounting site. However, it is also possible to work the profile into one or both boards on the mounting site, e. g. with a router machine. Preferably, a set of templates is used to create the profile on the 1^{st} and on the 2^{nd} board, respectively.

It is considered to be an advantage of the connection according to the invention that the profile maintains a straight edge surface of the 1^{st} and the 2^{nd} board without any elements like a tongue extending beyond the straight edge, even if the edge surface may be reduced by the profile. While the edge surface of the board carrying the profile is diminished in thickness, no parts of the profile are protruding beyond the edge surface of the board. The straight edge surface of the board facilitates transport and mounting of the profile and reduce damages to the profile.

The profile used to mount the connection according to the invention comprises a at least one standard cutout and a terminal cutout which differs from the standard cutouts. The cutout is formed into the edge area of a board, extending in X-, Y- and Z-direction. The terminal cutout is shorter in Y-direction than a standard cutout. Preferably, a sequence comprising at least two standard cutouts build the profile together with said terminal cutout. The terminal cutout is shorter than a standard cutout by 5 mm to 50 mm, preferably by 10 mm to 35 mm. The shorter terminal cutout allows for a relative movement of the 1^{st} and the 2^{nd} board in Y-direction once they have engaged as a result of a movement in Z-direction. Preferably, the standard cutout or cutouts and the terminal cutout form a sequence without interruptions. According to a further preferred embodiment of the connection, an opposite terminal cutout is provided which is longer than a standard cutout, preferably by the same distance of 5 mm to 50 mm that the terminal cutout is shorter than a standard cutout.

The profile used to create the connection comprises an undercut separating the 1^{st} and the 2^{nd} section of the profile, said undercut preferably extending at a varying distance from the edge of the board over the length of the profile. The undercut separates the 1^{st} and the 2^{nd} section of the profile in a X- and in a Z-direction. According to a preferred embodiment, the undercut is angled towards the edge of the board comprising the profile, preferably angled at two different angles over the length of the profile or undercut, respectively. A first part of the undercut creates at least one 1^{st} abutment in X-direction and a 2^{nd} part of the undercut extends in Y-direction, said abutment locking the 1^{st} and the 2^{nd} board in X-direction, preferably with a 1^{st} abutment and the 2^{nd} part of the undercut extending in Y-direction following each other consecutively. The 1^{st} abutment typically runs at an acute angle of less than 45° with regard to the edge 4. The 2^{nd} part of the undercut typically runs at an obtuse angle of larger than 50° with regard to the edge. The acute angle of the 1^{st} abutment is preferably between 20° and 40° while the obtuse angle of the 2^{nd} part of the undercut is preferably between 60° and 90°. According to a preferred embodiment, the undercut forms a sawtooth line.

The 2^{nd} section of the profile ends at a lateral face of the cutout extending in Z-direction which is situated furthest away from the edge surface of the profile. At the lateral face of the cutout, the 1^{st} or 2^{nd} board shows again its full thickness. After forming the connection, any relative movement between the 1^{st} board and the 2^{nd} board in X-direction is hindered by the 1^{st} abutment and, preferably, the lateral face of the cutout. While the lateral face of the cutout of the 1^{st} board and edge surface of the 2^{nd} board face each other when the connection is formed, the 1^{st} abutments of the 1^{st} and the 2^{nd} board face each other over at least a part of the 1^{st} abutment. The 1^{st} and the 2^{nd} board are thus in contact on at least part of the 1^{st} abutment and preferably on the lateral face of the cutout. The 1^{st} and the 2^{nd} board are either directly in contact or a small gap between the profiles of the 1^{st} and the 2^{nd} board of up to 1 mm, preferably of max. 0,5 mm is left. Preferably, said gap is left to be filled with glue. Said gap may also be used as space to accommodate fines.

According to a preferred embodiment of the invention, for at least one of the boards forming the connection, the undercut comprises a parallel section running parallel to the edge surface. This parallel section is preferably arranged between the 1^{st} abutment and the part of the undercut extending in Y-direction. The parallel section of the undercut is typically between 3 mm and 25 mm, preferably between 5 mm and 20 mm.

Preferably a profile shows at least two or three sets of an undercut comprising a 1^{st} abutment and a part of the undercut extending in Y-direction following each other consecutively. Locking occurs simply by joining the 1^{st} and the 2^{nd} board with a movement in Z-direction followed by a movement in Y-direction which is still possible after completing the movement in Z-direction. Alternatively, the connection may be permanent if glue is applied to the profile, e. g. to the undercut, the 1^{st} section and/or the 2^{nd} section of the profile where the 1^{st} and the 2^{nd} board overlap. When the 1^{st} and the 2^{nd} board are being joined, the 1^{st} section of the 1^{st} board engages with the 2^{nd} section of the 2^{nd} board and the 1^{st} section of the 2^{nd} board engages with the 2^{nd} section of the 1^{st} board. Thus, the connection between the 1^{st} and the 2^{nd} board relies on nearly the entire thickness of the 1^{st} and 2^{nd} boards to be joined, thereby rendering the connection very stable.

While the profile, according to a preferred embodiment, has been cut into the 1^{st} board extending from the 1^{st} surface, the profile which has been cut into the 2^{nd} board from the 2^{nd} surface complements the profile of the 1^{st} board. Complementing means here that the profile including the cutout with the undercut of the 2^{nd} board shows the same features as the profile cut into the 1^{st} board but is offset to complement the profile of the 1^{st} board. The profile of the 2^{nd} board is preferably offset lengthwise. The undercut of the 2^{nd} board is at a minimum distance to the edge where the undercut of the 1^{st} board is at a maximum distance to the edge of the 1^{st} board. The undercut of the 2^{nd} board is at a maximum distance from the edge of the 2^{nd} board where the undercut of the 1^{st} board is at a minimum distance from the edge of the 1^{st} board.

According to a preferred embodiment, the undercut has a minimum distance from the edge of 0,3 to 2 times of the thickness of the board and/or wherein the undercut has a maximum distance from the edge of 0,5 to 4 times of the thickness of the board. While the undercut may be formed at a closer or a further distance from the edge of the respective board, the stability of the connection is at an optimum at a minimum distance of 0,3 to 2 times of the thickness of the board with a maximum distance of 0,5 to 4 times the thickness of the board. If the undercut is kept within these distances, stability of the connection and cost of manufacture are at an optimum because only a limited amount of board material has to be removed in order to create the profile.

A further embodiment of the connection according to the invention comprises a profile wherein the 1^{st} section of the cutout extends from a surface of a board to a depth between 5% and 60% of the thickness of the board and/or wherein the 2^{nd} section of the cutout extends from a surface of a board to a depth between 10 and 80% of the thickness of the board. The 2^{nd} section preferably extends deeper from the surface into the board. A profile having 1^{st} and 2^{nd} sections showing the depths indicated-above provide a secure connection which is locked in the X- and the Y-direction of the XY-plane into which the 1^{st} and the 2^{nd} board are arranged. Also, a cutout having sections of the depths described-above can be manufactured economically without removing too much of the material of the board.

According to a preferred embodiment of the connection, the profile of the 1^{st} board and the profile of the 2^{nd} board have the same length. Length of the profile is measured at the edge of the board into which the profile of the connection is worked, usually the X-direction for one board and the Y-direction for the other board. According to an optimized version of the connection, the dimensions of the cutout of the profile are essentially identical on the 1^{st} and the 2^{nd} board.

If the 1^{st} and the 2^{nd} surface of the boards to be connected are identical, the profile can be worked into the edge of the board without further concern. This embodiment is typical for wooden boards like e. g. massive wood or laminated wood.

If, however, the 1^{st} surface is a lower surface and the 2^{nd} surface is an upper surface, and if the 1^{st} and the 2^{nd} surface have a different decor, then the profile has to be worked into the 1^{st} surface of the 1^{st} board and into the 2^{nd} surface of the 2^{nd} board. This is typical for e. g. laminated boards used for worktops.

If boards are rectangular and are to be connected at an angle, e. g. 45° or 90°, then optionally the profile of the 1^{st} board has to be worked into a long edge of the board and the profile of the 2^{nd} board has to be worked into a short edge of the board. The dimensions of the profile are essentially identical. The length of the profile is basically not limited, it is dependent on the boards to be connected. The width of the profile ranges often from 2 cm to 15 cm. It is usually kept as narrow as possible to avoid removing of board material. The depth of the profile depends on the thickness of the boards to be connected which usually ranges from 4 mm to 80 mm, often from 6 mm to 50 mm. Typically, the profile takes up 20% to 80% of the thickness of the profile with a minimum of 5% and a maximum of 90% of the thickness of the 1^{st} and the 2^{nd} board. It is preferred that the profile takes up 40% to 60% of the thickness of the boards to be joined because the board is not weakened significantly by the removal of material for the profile and at the same time not too much material has to be removed thus it is economically advantageous.

According to a preferred embodiment of the invention, the connection, namely the profile is formed into a 1^{st} and a 2^{nd} board made from wood, e. g. solid wood, plywood or laminated wood or made from reconstituted wood, e. g. particle board, fiber board or oriented strand board.

The connection according to the invention can be used to provide worktops, tabletops, workshop equipment or parts thereof, furniture or furniture components for indoor and/or outdoor use whenever two boards need to be connected or joined.

The invention further extends to a method of forming a connection according to one of claims 1- X, said method comprising the steps of
- forming a profile in the 1^{st} board, said profile extending from a 1^{st} surface,
- forming a profile in the 2^{nd} board, said profile extending from the 1^{st} surface or from a 2^{nd} surface, and
- placing the 1^{st} board above the 2^{nd} board with the profiles being aligned,
- moving the 1^{st} and the 2^{nd} board towards each other in a Z direction until the profiles engage.

Forming the profile can be done by milling or planing. If no surface decor has to be considered, e. g. when working with solid wood, the profile can be worked into the boards to be connected with only the parts of the edges to be considered which shall be joined. If there is a decor on one surface, the profile on the 1^{st} board needs to be worked from the 1^{st} surface bearing the decor and the profile on the 2^{nd} board needs to be worked from the 2^{nd} surface without a decor.

For forming the connection, the 1^{st} board is positioned, e. g. on a base or floor unit of a fitted kitchen or of laboratory or workplace equipment. Then, the 2^{nd} board is positioned above the 1^{st} board so that the profiles of the 1^{st} and the 2^{nd} board face each other. As the profiles are aligned, the boards are moved towards each other in a Z direction which is perpendicular to the XY-plane of the boards. Typically, the 2^{nd} board is moved towards the 1^{st} board which has already been put into place. If the connection shall be formed between two vertically arranged boards, the boards can be joined by moving both boards towards each other in a direction perpendicular to the XY-plane of the boards to be connected. The connection is finally made with a movement in X-direction. Without glue, the connection can be undone by shifting the 2^{nd} board back against the X-direction and lifting the 2^{nd} board from the 1^{st} board.

If glue is applied at least in part to the surface of the 1^{st} and 2^{nd} section of the 1^{st} and / or 2^{nd} board and / or to the undercut, the connection cannot be undone. It is then fixed by glue.

An embodiment showing details of the connection according to the invention is given in
- Fig. 1: showing a 1^{st} board with a profile according to the invention from above
- Fig. 2: showing a 2^{nd} board with a profile according to the invention from above
- Fig. 3a: showing a side view of a 2^{nd} board with a profile according to the invention with the 1^{st} section of the profile being close to the edge
- Fig. 3b: showing a side view of a 2^{nd} board with a profile according to the invention with the 1^{st} section of the profile being farther from the edge
- Fig. 4a: showing a side view of the connection according to the invention which complies with Fig. 3a

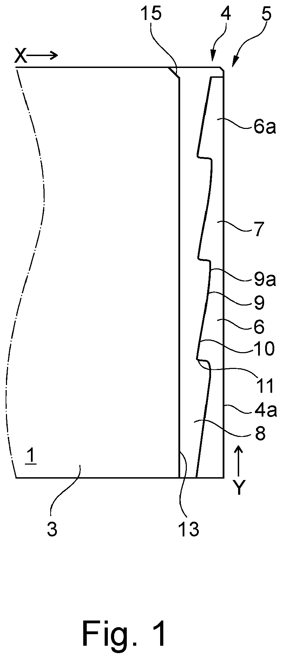

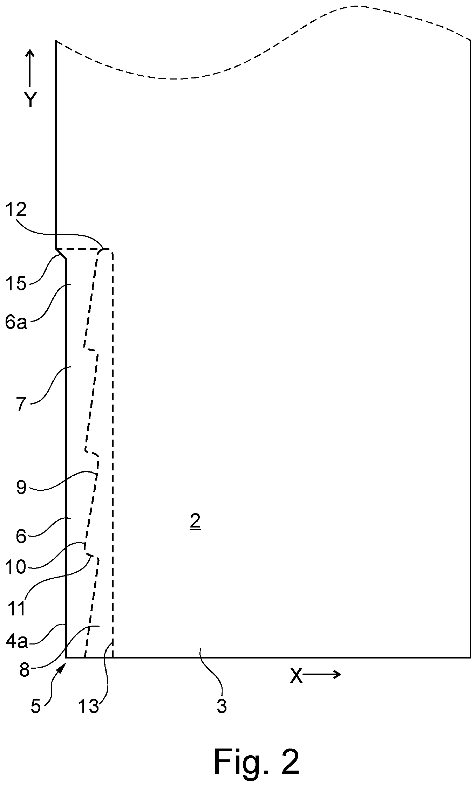

Fig. 1 shows a 1^{st} board 1 and Fig. 2 shows a 2^{nd} board 2, said boards 1, 2 may be made from any material but is typically made from wood or reconstituted wood like solid wood, plywood, laminated wood, particle board, oriented strand board or fiberboard. The boards 1, 2 extend in a XY-plane defined by a X-direction and a Y-direction. Thickness T of the boards is measured in a Z-direction which extends perpendicular to the X- and Y-direction. Fig. 1 shows a 1^{st} surface 3, usually the upper surface, of the 1^{st} board 1; Fig. 2 shows the 1^{st} surface 3 of the 2^{nd} board 2.

Each board 1, 2 has an edge area 4, each edge area 4 is carrying a profile 5. The edge area 4 starts from an edge surface 4a which extends over the thickness of the board 1 or 2. The profile 5 comprises a cutout 6, said cutout having a 1^{st} section 7 adjacent to the edge surface 4a and a 2^{nd} section 8 adjacent to the 1^{st} section but at a distance from the edge surface 4a. The cutout 6 ends at a lateral face 13 of the second section 8. The lateral face 13 also defines the end of the edge area 4. The cutout 6 is created by e.g. milling or planing. Preferably, the tools follow a template for each board in order to manufacture the respective profile by removing board material starting from the 1^{st} surface 3 of the 1^{st} board and starting from the 2^{nd} surface of the 2^{nd} board 2. The profile of the 2^{nd} board 2 is shown in broken lines as Fig. 2 shows the 1^{st} surface 3 while the profile is worked into the 2^{nd} surface 4.

The cutout 6 comprises an undercut 9 which divides the 1^{st} section of the cutout from the 2^{nd} section of the cutout 6 in a Z-direction which runs perpendicular to the XY-plane formed by the boards 1, 2. The undercut 9 extends preferably roughly parallel to the edge surface 4a but a first part thereof forms a 1^{st} abutment 10 in X-direction and a 2^{nd} part 11 thereof extends in Y-direction. To create the 1^{st} abutment 10 and the 2^{nd} part 11 of the undercut, parts of the undercut 9 are angled at different angles with regard to the edge surface 4a. Thus, according to a preferred embodiment of the invention the undercut 9 as seen from above shows the shape of a sawtooth. The 1^{st} abutment 10 typically runs at an acute angle of less than 45° with regard to the edge surface 4a. The 2^{nd} part 11 of the undercut 9 typically runs at an obtuse angle of larger than 50° with regard to the edge surface 4a. The acute angle of the 1^{st} abutment 10 is preferably between 20° and 40° while the obtuse angle of the 2^{nd} part 11 of the undercut 9 is preferably between 60° and 90° with regard to the edge surface 4a, respectively.

An optional end face 12 of the profile 5 in Y-direction may also prevent movement of the boards 1, 2 relative to each other in Y-direction and thus may stabilize the connection. The optional lateral face 13 of the profile 5 in X-direction may also prevent movement of the boards 1, 2 relative to each other in X-direction and thus may stabilizes the connection.

Fig. 1 and 2 each show a 2^{nd} abutment 15 which is formed on the lateral face 13 adjacent to the 2^{nd} section 8 of the profile of the 1^{st} board 1 and on the edge surface 4a adjacent to the 1^{st} section 7 of the 2^{nd} board. The 2^{nd} abutment 15 is arranged at the end of the profile 5 and angled so that movement in Y-direction is blocked. The end-face 12 of the profile may also prevent movement in Y-direction.

Fig. 1 shows a parallel section 9a of the undercut which runs parallel to the edge surface 4a and which is arranged between the 1^{st} abutment 10 and the part 11 of the undercut in Y-direction. Parallel section 9a is an optional part of the undercut 9 which facilitates mounting of the connection. A parallel section 9a may be formed on both boards 1, 2 but it facilitates mounting of the connection even if it is worked into one board only.

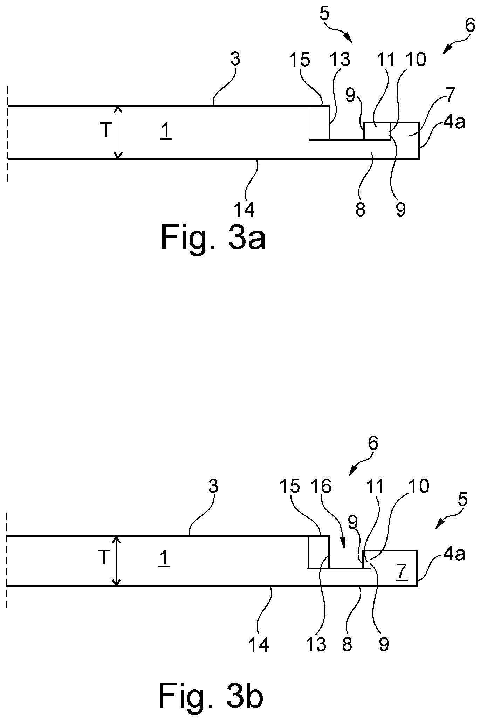

Fig. 3a shows a schematic view across the 1^{st} board 1 along lines C-C indicated in Fig. 1 with a profile 5 worked into the board adjacent to the edge surface 4a. The edge area 4 extends from the edge surface 4a to the lateral face 13 of the cutout. The profile comprises a cutout 6 which has been worked into the 1^{st} board 1 from the 1^{st} surface 3. The cutout 6 comprises a 1^{st} section 7 adjacent to the edge surface 4a. A 2^{nd} section 8 of the cutout 6 further from the edge surface 4a and closer to the lateral face 13 delves deeper into the 1^{st} board 1 so that the 1^{st} section 7 forms a raised lip towards the edge surface 4a. An undercut 9 extends between the 1^{st} section 7 and the 2^{nd} section 8, said undercut 9 extending essentially in a Z-direction.

The undercut 9 runs the length of the profile 5 in the XY-plane. The undercut 9, however, does not run constantly parallel to the Y-direction. The undercut 9 is divided into at least one part forming a 1^{st} abutment 10 in X-direction and into at least one 2^{nd} part 11 in Y-direction. Preferably, the undercut 9 comprises at least 2 or 3 sets, each set comprising a 1^{st} abutment 10 and a 2^{nd} part 11. To create the 1^{st} abutment and the 2^{nd} part, the undercut 9 runs at an acute angle of max. 45° with regard to the edge surface 4a to create the 1^{st} abutment 10 and at an obtuse angle of at least 50° with regard to the edge surface 4a to create the 2^{nd} part 11 of the undercut 9. Fig. 3 shows the rather wide 2^{nd} part 11 formed by the undercut 9. The 1^{st} abutment 10 is shown as a line. The cutout 6 ends at the lateral face 13. The 2^{nd} surface 14 of the board 1, usually the lower surface, remains untouched by the profile 5.

The undercut 9 limiting the 1^{st} section 7 of the profile 5 has a minimum distance of the edge surface 4a of 0,5 times of a thickness T of the 1^{st} board 1. The undercut 9 has a maximum distance of the edge surface 4a of 1 time the thickness T of the 1^{st} board 1. Generally, the minimum distance of the undercut 9 of the edge 4 may be 0, 3 to 2 times the thickness T of the 1^{st} board 1.

At the 2^{nd} section 8, the profile 5 extends from the 1^{st} surface 3 into ca. 70% of the thickness T of the 1^{st} board 1. At the 1^{st} section 7, the cutout 6 removes about 40% of the thickness T of the 1^{st} board 1, starting from the 1^{st} surface 3. The undercut thus extends over ca. 30% of the thickness T of the 1^{st} board 1. Thus, the 1^{st} abutment 10 and the 2^{nd} part 11 of the undercut prove sufficient to form a stable connection. Generally, the 1^{st} section 7 of a cutout 6 extends from the 1^{st} surface 3 of the 1^{st} board 1 to a depth between 5% and 60% of the thickness T of the board and the 2^{nd} section 8 of a cutout 6 extends from the 1^{st} surface 3 of the 1^{st} board to a depth between 10% and 80% of the thickness T of the 1^{st} board 1.

Fig. 3b shows a schematic view across the 1^{st} board 1 along lines D-D indicated in Fig. 1. Profile 5 shows a 2^{nd} abutment 11 which is much smaller as the undercut 9 is angled in an acute angle to form the 1^{st} abutment 10. At the cut D-D, the 1^{st} section 7 has the width of 1 time the thickness T of the 1^{st} board 1. The space 16 opening between the undercut 9 and the lateral face 13 is wide enough to accommodate the complementing profile 5 of the 2^{nd} board 2.

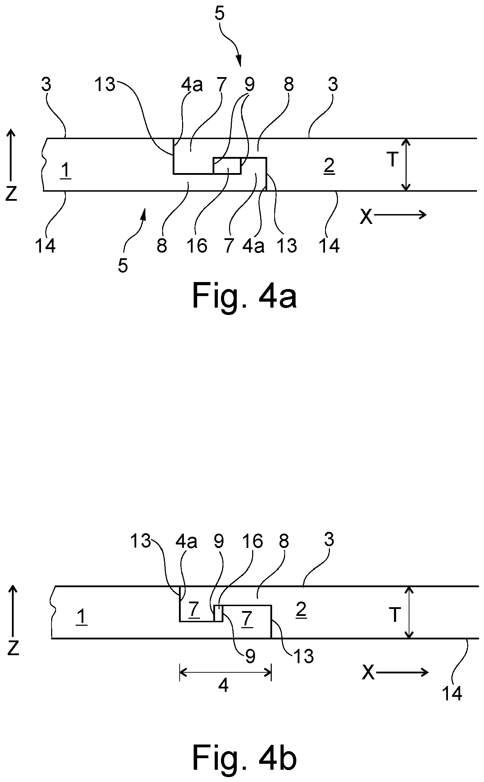

Fig. 4a shows an embodiment of the connection according to the invention. The 2^{nd} board 2 has the same thickness T as the 1^{st} board 2. The profile 5a of the 2^{nd} board 2 corresponds to the profile 5 of the 1^{st} board 1 in all details and optional embodiments but mirrors the profile 5 of the 1^{st} board 1. While the profile 5 has been cut into the 1^{st} board extending from the 1^{st} surface 3, the profile 5a has been cut into the 2^{nd} board from the 2^{nd} surface 14 complementing to the profile 5 of the 1^{st} board 1. Complementing means that the profile 5a including the cutout 6 with the undercut 9 of the 2^{nd} board 2 shows the same features as the profile 5 cut into the 1^{st} board 1 but is offset to complement the profile 5 of the 1^{st} board. The undercut 6 of the 2^{nd} board 2 is at a minimum distance to the edge surface 4a where the undercut 6 of the 1^{st} board 1 is at a maximum distance to the edge surface 4a of the 1^{st} board 1. The undercut 6 of the 2^{nd} board 2 is at a maximum distance from the edge surface 4a of the 2^{nd} board where the undercut 6 of the 1^{st} board 1 is at a minimum distance from the edge surface 4a of the 1^{st} board 1. The profile 5 of the 2^{nd} board is preferably offset lengthwise, i. e. Y-direction.

To work the profile 5 into the 2^{nd} board 2, it has been turned to rest on the 1^{st} surface 3 and the profile 5 has been worked into the 2^{nd} board from the 2^{nd} surface 14 using a template that corresponds to template used to create the profile 5 of the 1^{st} board 1. The 2^{nd} board 2 has then been turned and the two profiles 5 have been joined by first lowering the 2^{nd} board 2 onto the 1^{st} board 1 and then moving the 1^{st} and 2^{nd} board relative to each other in Y-direction. No further tools are required to form the connection according to the invention.

In order to easily execute the movement in Y-direction, a terminal cutout 6a, preferably the terminal cutout 6a closest to the 2^{nd} abutment 15, is shorter than a standard cutout 6 in X-direction, typically by 5 mm to 50 mm, preferably by 10 mm to 25 mm. Upon moving the 1^{st} and the 2^{nd} board 1 and 2 in Y-direction, preferably only the 1^{st} and the 2^{nd} abutments 10, 15 are in contact with each other to define clearly the position of the 1^{st} and the 2^{nd} board with regard to each other. In order to facilitate movement in Y-direction, the opposing terminal cutout may be longer than a standard cutout 6. The additional length of the opposing terminal cutout may be the same distance of 5 mm to 50 mm, preferably by 10 mm to 25 mm as the terminal cutout 6a. Space 16 opens between the opposing parts 11 of the undercut and preferably between the parallel section 9a of the undercut and the opposing lateral surface 13. Space 16 may accommodate particles or fines, e. g. from working the profile 5 into the board. According to a preferred embodiment, the 1^{st} and the 2^{nd} board are also in contact at the edge surface 4a of one board and the lateral surface 13 of the other board in order to prevent movement in X-direction.

Upon executing the aforementioned movements in Z- and Y-direction, the 1^{st} and 2^{nd} abutments 10, 15 of each board 1, 2 abut each other at least in part and prevent movement of the 1^{st} and the 2^{nd} board in X- and Y-direction. Preferably, the edge surface 4a of the 1^{st} board 1 and the lateral face 13 of the 2^{nd} board 2 abut each other, thereby preventing movement in X-direction and contributing to the excellent strength properties of the connection. Optionally, the end face 12 and a 2^{nd} abutment are placed adjacent to each other in order to avoid any movement of the connection in the Y-direction. According to a preferred embodiment of the connection according to the invention, the top of the 1^{st} section 7 of the 1^{st} board which extends parallel to the 1^{st} surface 3 abuts the underside of the 2^{nd} section 8 of the 2^{nd} board extending parallel to the 1^{st} surface 3 of the 2^{nd} board 2, thereby also stabilizing the connection.

Further, the edge surface 4a close to the 1^{st} surface 3 and/or close to the 2^{nd} surface 14 abut to the respective 1^{st} and/or 2^{nd} surface 3, 14 of the other board. Alternatively, the edge surface 4a of the 2^{nd} surface may be beveled to improve joining of the 1^{st} and the 2^{nd} board.

Optionally, glue can be added to at least part of the profile 5 in order to create a fixed connection. The connection is tight and is able to withstand a large load. When glue is used, the connection is usually watertight. The 1^{st} and the 2^{nd} surface 3, 14 abut closely to show only a straight line. Preferably, the profile 5 of the 1^{st} board 1 and the 2^{nd} board 2 have the same length, the length of the profile 5 being usually measured along the Y-direction on one board and along the X-direction along the other board.

The connection according to the invention may be used to connect boards to form worktops or tabletops. It may also be used to build partitions or other constructions made from boards, furniture or furniture components for indoor and/or outdoor use. The boards to be connected may be arranged in line or at an angle towards each other. In order to connect boards at an angle, one or both boards need to be provided with an edge arranged at the required angle. The profile according to the invention then simply needs to be worked into each edge. Preferably, the profile is worked into the edges of a set of two boards 1, 2 at a workstation or manufacturing site. The boards 1, 2 are then transported to the mounting site. Glue can be applied as required. The boards 1, 2 are then arranged so that the respective profiles 5 face each other and the upper board is lowered towards the lower board to form the connection. The connection can usually be formed by one person laying the 1^{st} board 1 and then arranging and lowering the 2^{nd} board 2 onto the 1^{st} board 1 without using any tools. Thus, mounting the connection is easy.

### List of reference signs

- 1: 1^{st} board
- 2: 2^{nd} board
- 3: 1^{st} surface
- 4: edge area
- 4a: edge surface
- 5: profile
- 6: standard cutout
- 6a: terminal cutout
- 7: 1^{st} section of profile
- 8: 2^{nd} section of profile
- 9: undercut
- 9a: parallel section of the undercut
- 10: 1^{st} abutment in X-direction
- 11: 2^{nd} part of the undercut in Y-direction
- 12: end face
- 13: lateral face
- 14: 2^{nd} surface
- 15: 2^{nd} abutment in Y-direction
- 16: space
- X-: direction
- Y-: direction
- Z-: direction
- T: thickness

## Claims

1. Connection of a 1^{st} board (1) and a 2^{nd} board (2) made from wood or reconstituted wood, said 1^{st} and 2^{nd} boards (1,2) being arranged in a XY-plane, said 1^{st} and 2^{nd} boards (1,2) each having a 1^{st} and a 2^{nd} surface (3, 14), a thickness (T) and an edge area (4) with an edge surface (4a) extending over the thickness (T) of the board (1,2), wherein the connection comprises a profile (5) in each board (1, 2) extending over at least part of the edge area (4), said profile (5) comprising at least one standard cutout (6) and a terminal cutout (6a) extending in the edge area (4) from a surface (3, 14) of a board over part of its thickness (T), each cutout (6, 6a) being less deep in a 1^{st} section (7) adjacent to the edge surface (4a) of the board (1,2) and being deeper in a 2^{nd} section (8) at a distance from the edge surface (4a) of the board (1,2), with an undercut (9) separating the 1^{st} and the 2^{nd} section, said undercut (9) forming a 1^{st} abutment (10) in an X-direction, wherein a 2^{nd} abutment (15) in a Y-direction is formed on the 1^{st} and on the 2^{nd} board, said 1^{st} and 2^{nd} abutment (10,15) being arranged in the X- or Y-direction, respectively, or at an angle thereto, with the profile (5) of the 1^{st} board (1) and the 2^{nd} board (2) complementing each other,
wherein a terminal cutout (6a) is shorter in Y-direction than a standard cutout (6).

2. Connection according to claim 1, wherein the undercut (9) extends at a varying distance from the edge surface (4a) of the board (1,2).

3. Connection according to claim 1 or 2, wherein a part of the undercut (9) forms a 1^{st} abutment (10) in X-direction, preferably with part of the undercut (9) running at an angle of up to 45° with regard to the edge surface (4a).

4. Connection according to one of the preceding claims, wherein the 2^{nd} abutment (15) in Y-direction is formed on the 1^{st} and the 2^{nd} board, each, with an angle of 20° to 70°, preferably 50° to 60° with regard to the edge surface (4a).

5. Connection according to one of the preceding claims, wherein the undercut (9) has a minimum distance from the edge surface (4a) of 0,3 to 2 times of the thickness (T) of the board and/or wherein the undercut has a maximum distance from the edge surface (4a) of 0,5 to 4 times of the thickness (T) of the board.

6. Connection according to one of the preceding claims wherein the profile (5) is worked into a 1^{st} surface (3) of the 1^{st} board (1) and into a 2^{nd} surface (14) of the 2^{nd} board (2).

7. Connection according to claim 6, wherein the 1^{st} surface (3) is the upper surface and the 2^{nd} surface (14) is the lower surface.

8. Connection according to one of the preceding claims, wherein the 1^{st} section (7) of a cutout (6) extends from a surface (3, 14) of a board (1, 2) to a depth between 5% and 60% of the thickness (T) of the board (1,2).

9. Connection according to one of the preceding claims, wherein the 2^{nd} section (8) of a cutout (6) extends from a surface (3, 14) of a board (1, 2) to a depth between 10 and 80% of the thickness (T) of the board (1, 2).

10. Connection according to claim 1, wherein the terminal cutout (6a) is shorter in Y-direction than a standard cutout (6) by 5 mm to 50 mm.

11. Connection according to claim 1, wherein the 1^{st} and the 2^{nd} board (1, 2) are bound by glue.

12. Connection according to one of the preceding claims, wherein the profile (5) is formed in wood, e. g. solid wood, plywood or laminated wood or in reconstituted wood, e.g. particle board, fiber board, oriented strand board.

13. Connection according to one of the preceding claims, wherein the connection is used to provide worktops, tabletops, workshop equipment or parts thereof, furniture or furniture components for indoor and/or outdoor use.

14. Method of forming a connection between a 1^{st} board and a 2^{nd} board according to one of claims 1- 13, said method comprising the steps of
- forming a profile (5) in the 1st board (1) , said profile (5) extending from a 1^{st} surface (3)
- forming a profile (5) in the 2^{nd} board (2), said profile extending from a 1^{st} surface (3) or a 2^{nd} surface (14), and
- placing the 1st board (1) above the 2nd board (2) with the profiles (5) being aligned,
- moving the 1^{st} and the 2^{nd} board (1,2) towards each other in a Z-direction until the profiles (5) engage vertically,
- moving the 1^{st} and the 2^{nd} board (1, 2) relative to each other in a Y-direction until the profiles (5) engage laterally.

15. Method according to claim 14, comprising the step of applying glue to at least one board (1, 2) prior to joining the 1^{st} and 2^{nd} boards (1, 2) vertically and/or laterally.
